# EUROPÄISCHE PATENTSCHRIFT

(11) **EP 0 437 708 B1**
(45) Veröffentlichungstag und Bekanntmachung des Hinweises auf die Patenterteilung: **20.04.1994**
(21) Anmeldenummer: 90122757.9
(22) Anmeldetag: 28.11.1990
(51) Int. Cl.: B29C 61/10, B29C 61/06

(54) **Verfahren zur Herstellung eines wärmeschrumpfbaren Schlauches**
Method of making a heat-shrinkable sleeve
Procédé pour la fabrication d'un manchon thermorétractable

(30) Priorität: 16.01.1990 DE 4001067
(43) Veröffentlichungstag der Anmeldung: 24.07.1991
(73) Patentinhaber: RXS Schrumpftechnik-Garnituren GmbH, D-58093 Hagen (DE)
(72) Erfinder: Breuer, Peter, Dipl.-Ing., D-5800 Hagen 7 (DE); Winterhoff, Hans, Dipl.-Ing., D-5800 Hagen 1 (DE); Sagemühl, Dieter, Dipl.-Ing., W-5804 Herdecke (DE)
(74) Vertreter: Fuchs, Franz-Josef, Dr.-Ing.

(56) Entgegenhaltungen:
- EP-A- 0 069 249
- EP-A- 0 078 695
- DE-A- 2 937 749
- PATENT ABSTRACTS OF JAPAN vol. 4, no. 94 (M-19)(576) 8. Juli 1980& JP-A-55 051 530 ( NIPPON DENSHIN DENWA KOSHA ) 15. April 1980

## Beschreibung

Die Erfindung betrifft ein Verfahren zur Herstellung eines wärmeschrumpfbaren Schlauches, insbesondere mit großem Durchmesser.

Bisher werden wärmeschrumpfbare Schläuche im allgemeinen dadurch hergestellt, daß diese in rohrförmigem Zustand extrudiert, vernetzt und anschließend aufgeweitet werden. Diese Herstellungsweise ist für Schläuche bzw. Rohre mit kleineren Durchmessern durchaus akzeptabel, doch ergeben sich erhebliche Schwierigkeiten, wenn Schläuche bzw. Rohre mit größeren Durchmessern gefordert werden. Bisher sind bei der Extrusion für verschiedene Rohrgrößen unterschiedliche Werkzeuge und eventuell sogar unterschiedliche Extruder notwendig. Weiterhin können Rohre bzw. Schläuche mit Durchmessern, die größer als 50 mm sein sollten, bei dem Vernetzungsvorgang nicht mehr in einfacher Weise umgelenkt werden, so daß man die Vernetzung nurmehr an einzelnen Stücklängen mit einer Länge bis zu etwa einem Meter vornehmen kann. Bei der anschließenden Expansion bzw. Verstreckung ist bisher ebenfalls für jede Durchmessergröße ein separates Werkzeug erforderlich. Aus dem Vorgesagten ergibt sich, daß auch die Expansion bzw. Verstreckung nur an einzelnen Stücklängen vorgenommen werden kann, so daß eine kontinuierliche Fertigung nicht möglich ist. Dadurch, daß die Rohrabmessungen durch das Werkzeug und den Extruder begrenzt sind, ist auch das Aufweitverhältnis mit ungefähr 3:1 ebenfalls begrenzt. Daraus ergibt sich, daß augenblicklich Schläuche bzw. Rohre mit Durchmessern über 300 mm sehr schwer in kontinuierlich ablaufender Weise hergestellt werden können.

Für vorliegende Erfindung ergibt sich die Aufgabe, ein Verfahren zur Herstellung eines wärmeschrumpfbaren Schlauches zu schaffen, mit dem eine kontinuierlich ablaufende Fertigung erfolgen kann. Die gestellte Aufgabe wird nun mit Hilfe eines Verfahrens der eingangs erläuterten Art dadurch gelöst, daß ein kontinuierlich fortlaufendes Band aus Kunststoff, insbesondere aus Polyolefin, hergestellt, vorzugsweise extrudiert wird, daß dieses Band kontinuierlich fortlaufend vernetzt und anschließend kontinuierlich fortlaufend gestreckt wird und daß dann die senkrecht zur Streckrichtung verlaufenden Kanten längsseitig mit Hilfe eines Verbindungsstreifens so miteinander verbunden werden, daß sich ein Schlauch ergibt.

Die Vorteile gemäß der Erfindung liegen nun darin, daß ein derartig hergestellter Schlauch in kontinuierlichem Ablauf gefertigt werden kann. Dies kann sowohl in einer einzigen Ablauffolge als auch in Einzelschritten durchgeführt werden. Wichtig ist jeweils dabei, daß innerhalb eines Schrittes ein kontinuierlicher Durchlauf gewährleistet ist. Dabei können in den einzelnen Schritten noch zusätzliche Maßnahmen in Form von Beschichtungen mit einem Kleber oder ähnlichem durchgeführt werden. Mit Hilfe des Verbindungsstreifens, der entlang der längsseitigen Kanten des Bandes aufgebracht wird, erfolgt eine absolut sichere Verbindung, da dieser ein Mittel enthält, welches eine chemische Vernetzung verursacht, die in die Kanten des Bandes übergreift. Auf diese Weise wird eine absolut sichere Verbindung geschaffen.

Die Erfindung wird nun anhand von vier Figuren näher erläutert.
- Figur 1: zeigt die Verbindung der Bänder durch Überlappung der längsseitigen Kanten.
- Figur 2: zeigt eine Verbindung, bei der die Kanten stirnseitig aneinandergestoßen sind.
- Figur 3: zeigt eine Anordnung mit aneinander gestoßenen Kanten, die von dem Verbinungsstreifen und einem dazwischen liegenden Zusatzstreifen überdeckt sind.
- Figur 4: zeigt die Verbindung mit angeschrägten Kanten.

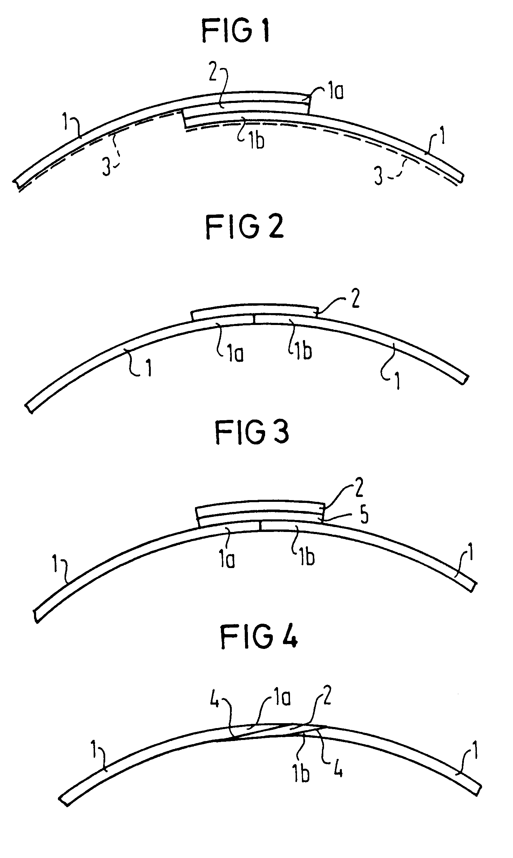

Die Figur 1 zeigt nun überlappend angeordnete Kanten 1a und 1b eines bereits kontinuierlich gefertigten, vorzugsweise extrudierten Bandes 1 aus Kunststoff, vorzugsweise aus Polyolefin. Dieses kontinuierlich hergestellte Band 1 wurde in einem zweiten Schritt, der sich zum Beispiel auch gesondert anschließen kann, kontinuierlich in fortlaufender Weise vernetzt. Anschließend erfolgt eine ebenfalls kontinuierlich ablaufende Streckung oder Dehnung (Expansion) in Längs- oder Querrichtung. Diese Bänder 1 können nun je nach Bedarf bereits bei der Extrusion oder auch bei der Streckung bzw. Dehnung zum Beispiel mit einem Kleber 3 beschichtet werden und zwar ebenfalls in kontinuierlich fortlaufender Weise. Ein so weit gefertigtes Band wird nun je nach Erfordernis bezüglich der Länge und des gewünschten Durchmessers geschnitten. Anschließend wird dieses Band 1 zum Schlauch bzw. Rohr geformt, wobei die längsseitigen Kanten 1a und 1b senkrecht zur Streck- bzw. Dehnrichtung zusammengeführt und gegenseitig fixiert werden. Die Figur 1 zeigt nun eine gegenseitige Überlappung der Kanten 1a und 1b, wobei zwischen den beiden Kanten 1a und 1b ein Verbindungsstreifen 2 eingelegt wird. Dieser besteht ebenfalls aus Kunststoff, der auf das Kunststoffmaterial des Bandes 1 abgestimmt ist und somit beispielsweise ebenfalls wie das des Bandes ein Polyolefin ist. Dieses Polyolefin kann unvernetzt oder auch vernetzt sein und ist auch in dieser Richtung auf den Kunststoff des Bandes abgestimmt. Nun ist jedoch zusätzlich in diesem Verbindungsstreifen 2 ein Mittel eingebracht, das eine chemische Vernetzung verursacht. Diese Vernetzung wird durch Verpressung und/oder Wärmezufuhr nach dem Zusammenfügen in der oben beschriebenen Weise in Gang gesetzt. Dabei entsteht durch diese Vernetzung eine in die Kanten 1a, 1b des Bandes 1 übergreifende dauerhafte Verbindung, die sich auch bei dem späteren Schrumpfvorgang des Schlauches bzw. Rohres nicht öffnet.

Figur 2 zeigt eine zweite Verbindungsmöglichkeit der Kanten 1a und 1b des nach den oben beschriebenen Schritten vorbehandelten Bandes 1. Hier sind die Kanten 1a und 1b auf Stoß gesetzt und die Verbindung erfolgt im wesentlichen durch den die Stoßlinie überdeckenden Verbindungsstreifen 2, der ebenfalls wie vorher bereits beschrieben, mit einem vernetzungsanregenden Mittel versehen ist. Auch hier bildet sich aufgrund der Vernetzung eine bei Schrumpftemperpatur unlösbare Verbinung des zusammengeführten Kantenbereiches.

Die Figur 3 zeigt eine weitere Verbindungsmöglichkeit, bei der eine noch höhere Sicherheit zur Verbindung der längsseitigen Kanten 1a und 1b gewährleistet ist. Hier wird zwischen dem überdeckenden Verbindungsstreifen 2 und dem auf Stoß gesetzten Kantenbereich 1a - 1b ein weiterer Zusatzstreifen 5 eingeführt, der ebenfalls aus einem mit dem Kunststoff des Bandes 1 "verträglichen" Material besteht. Dieser Zusatzstreifen 5, der nun mit einem die Vernetzung anregenden Mittel versehen ist, liegt jedoch zwischen dem Verbindungsstreifen 2 aus vernetztem oder unvernetztem Kunststoff, zum Beispiel ebenfalls einem Polyolefin, und dem Kantenbereich 1a-1b. So erfolgt die Vernetzung vom Zusatzstreifen 5 aus zu den zusammengeführten Kanten 1a und 1b und zum Verbindungsstreifen 2, so daß sich eine erhöhte Festigkeit der Verbindung einstellt.

Die Figur 4 zeigt schließlich eine Möglichkeit zur Verbindung der Kanten 1a und 1b, die mit einer Abschrägung 4 versehen sind, so daß die Stoßfläche vergrößert wird. Die weiteren Verhältnisse gleichen den bisher beschriebenen Beispielen und können in entsprechender Weise miteinander kombiniert werden.

Als vernetzungsanregendes Mittel kann beispielsweise Peroxid in den Kunststoff der Bänder eingebracht werden.

## Patentansprüche

1. Verfahren zur Herstellung eines wärmeschrumpfbaren Schlauches, insbesondere mit großem Durchmesser, **dadurch gekennzeichnet,** daß ein kontinuierlich fortlaufendes Band (1) aus Kunststoff, insbesondere aus Polyolefin, hergestellt, vorzugsweise extrudiert wird, daß dieses Band (1) kontinuierlich fortlaufend vernetzt und anschließend kontinuierlich fortlaufend gestreckt wird und daß dann die senkrecht zur Streckrichtung verlaufenden Kanten (1a, 1b) längsseitig mit Hilfe eines Verbindungsstreifens (2) so miteinander verbunden werden, daß sich ein Schlauch ergibt.

2. Verfahren nach Anspruch 1, **dadurch gekennzeichnet,** daß das Band (1) bei der Extrusion kontinuierlich fortlaufend mit einem Kleber, insbesondere Schmelzkleber, beschichtet wird.

3. Verfahren nach Anspruch 1, **dadurch gekennzeichnet,** daß das Band (1) bei der Streckung kontinuierlich fortlaufend mit einem Kleber (3), insbesondere einem Schmelzkleber beschichtet wird.

4. Verfahren nach einem der vorhergehenden Ansprüche, **dadurch gekennzeichnet,** daß das Band (1) der erforderlichen Schlauchgröße entsprechend zugeschnitten wird, wobei vorzugsweise ein Durchmesser von größer als 200 mm vorgegeben wird.

5. Verfahren nach einem der vorhergehenden Ansprüche, **dadurch gekennzeichnet,** daß das Band (1) entlang seiner längsseitigen Kanten (1a, 1b) überlappt wird und daß zwischen diesen Kanten (1a, 1b) ein Verbindungsstreifen (2) eingebracht wird.

6. Verfahren nach einem der vorhergehenden Ansprüche, **dadurch gekennzeichnet,** daß die Kanten (1a, 1b) im Überlappungsbereich (4) spitz zulaufend ausgebildet werden.

7. Verfahren nach einem der Ansprüche 1 bis 4, **dadurch gekennzeichnet,** daß das Band (1) entlang der Kanten (1a, 1b) auf Stoß zusammengefügt wird und daß ein die Stoßlinie überdeckender Verbindungsstreifen (2) aufgebracht wird.

8. Verfahren nach Anspruch 7, **dadurch gekennzeichnet,** daß zwischen dem Kantenbereich (1a-1b) des Bandes (1) und dem Verbindungsstreifen (2) ein Zusatzstreifen (5) eingefügt wird, der ein Mittel, beispielhaft Peroxid, enthält, das bei Einwirkung von Druck und/oder Wärme eine chemische Vernetzung in Gang setzt.

9. Verfahren nach einem der vorhergehenden Ansprüche, **dadurch gekennzeichnet,** daß ein Verbindungsstreifen (2) aus Kunststoff, vorzugsweise aus Polyolefin verwendet wird, der ein Mittel, beispielhaft Peroxid, enthält, das bei Einwirkung von Druck und/oder Wärme eine chemische Vernetzung in Gang setzt.

10. Verfahren nach einem der vorhergehenden Ansprüche, **dadurch gekennzeichnet,** daß ein unvernetztes Kunststoffmaterial für den Verbindungsstreifen (2) verwendet wird.

11. Verfahren nach einem der Ansprüche 1 bis 9, **dadurch gekennzeichnet,** daß ein vernetztes Kunststoffmaterial für den Verbindungsstreifen (2) verwendet wird.

## Claims

1. Process for producing a heat-shrinkable tube, in particular with a large diameter, characterized in that a continuous strip (1) of plastic, in particular polyolefin, is produced, preferably extruded, in that this strip (1) is continuously crosslinked and subsequently continuously stretched and in that the edges (1a, 1b) running perpendicular to the stretching direction are then joined to one another longitudinally with the aid of a joining strip (2) so that a tube is produced.

2. Process according to Claim 1, characterized in that during the extrusion, the strip (1) is continuously coated with an adhesive, in particular a hot-melt adhesive.

3. Process according to Claim 1, characterized in that during the stretching, the strip (1) is continuously coated with an adhesive (3), in particular a hot-melt adhesive.

4. Process according to one of the preceding claims, characterized in that the strip (1) is cut corresponding to the required tube size, a diameter of greater than 200 mm being preferably specified.

5. Process according to one of the preceding claims, characterized in that the strip (1) is overlapped along its longitudinal edges (1a, 1b) and in that a joining strip (2) is introduced between these edges (1a, 1b).

6. Process according to one of the preceding claims, characterized in that the edges (1a, 1b) are designed tapering to a point in the overlapping region (4).

7. Process according to one of Claims 1 to 4, characterized in that the strip (1) is butt-jointed along the edges (1a, 1b) and in that a joining strip (2) covering the butt-joint line is applied.

8. Process according to Claim 7, characterized in that an additional strip (5) is inserted between the edge region (1a-1b) of the strip (1) and the joining strip (2), which additional strip contains an agent, for example peroxide, which initiates a chemical crosslinking under the effect of pressure and/or heat.

9. Process according to one of the preceding claims, characterized in that a joining strip (2) of plastic, preferably of polyolefin, is used, which contains an agent, for example peroxide, which initiates a chemical crosslinking under the effect of pressure and/or heat.

10. Process according to one of the preceding claims, characterized in that a non-crosslinked plastic material is used for the joining strip (2).

11. Process according to one of Claims 1 to 9, characterized in that a crosslinked plastic material is used for the joining strip (2).

## Revendications

1. Procédé de fabrication d'un manchon thermorétractable, notamment de grand diamètre, caractérisé en qu'il consiste à fabriquer, de préférence à extruder, une bande (1) en matière plastique, notamment en polyoléfine, qui se déplace continuellement, à réticuler cette bande (1) qui se déplace continuellement et à étirer ensuite alors qu'elle se déplace continuellement, et ensuite à relier l'un à l'autre les bords (1a, 1b) qui s'étendent perpendiculairement à la direction d'étirage du côté longitudinal à l'aide d'une bande (2) de liaison de manière à former un manchon.

2. Procédé selon la revendication 1, caractérisé en ce qu'il consiste à revêtir la bande (1) lors de l'extrusion, alors qu'elle se déplace continuellement, d'un adhésif, notamment d'une colle fusible.

3. Procédé suivant la revendication 1, caractérisé en ce qu'il consiste à revêtir la bande (1) lors de l'étirage, alors qu'elle se déplace continuellement, d'un adhésif (3), notamment d'une colle fusible.

4. Procédé suivant l'une des revendications précédentes, caractérisé en ce qu'il consiste à découper la bande (1) à la dimension du manchon qui est nécessaire, en lui donnant de préférence un diamètre supérieur à 2OO mm.

5. Procédé suivant l'une des revendications précédentes, caractérisé en ce qu'il consiste à mettre la bande (1) à recouvrement le long de ses bords (1a, 1b) longitudinaux et à insérer entre ces bords (1a, 1b) une bande (2) de liaison.

6. Procédé suivant l'une des revendications précédentes, caractérisé en ce qu'il consiste à rendre pointus les bords (1a, 1b) dans la partie (4) à recouvrement.

7. Procédé suivant l'une des revendications 1 à 4, caractérisé en ce qu'il consiste à assembler bord à bord la bande (1a, 1b) le long des bords (1a,1b) et à déposer une bande (2) de liaison recouvrant la ligne de jointure.

8. Procédé suivant la revendication 7, caractérisé en ce qu'il consiste à insérer entre la partie de bord (1a et 1b) de la bande (1) et la bande (2) de liaison une bande (5) supplémentaire qui contient un agent, par exemple un peroxyde, qui initie une réticulation chimique sous l'action de la pression et/ou de la chaleur.

9. Procédé suivant l'une des revendications précédentes, caractérisé en ce qu'il consiste à utiliser une bande (2) de liaison en matière plastique, de préférence en polyoléfine, qui contient un agent, par exemple un peroxyde, qui initie une réticulation chimique sous l'action de la pression et/ou de la chaleur.

10. Procédé suivant l'une des revendications précédentes, caractérisé en ce qu'il consiste à utiliser une matière plastique non réticulée pour la bande (2) de liaison.

11. Procédé suivant l'une des revendications 1 à 9, caractérisé en ce qu'il consiste à utiliser une matière plastique réticulée pour la bande (2) de liaison.
